# EUROPEAN PATENT SPECIFICATION

(11) **EP 3 024 319 B1**
(45) Date of publication and mention of the grant of the patent: **31.01.2018**
(21) Application number: 14753341.8
(22) Date of filing: 28.07.2014
(51) Int. Cl.: A01K 63/04, C08K 3/22, C08L 67/04, B01J 20/04, B01J 20/28, B01J 20/32

(54) **NEW HYBRID BIODEGRADABLE POLYMER FOR EFFICIENT NITROGEN AND PHOSPHATE REDUCTION**
NEUES HYBRIDES BIOLOGISCH ABBAUBARES POLYMER ZUR EFFIZIENTEN STICKSTOFF- UND PHOSPHATREDUKTION
NOUVEAU POLYMÈRE BIODÉGRADABLE HYBRIDE POUR RÉDUCTION EFFICACE DE L'AZOTE ET DU PHOSPHATE

(30) Priority: 26.07.2013 EP 13178223
(43) Date of publication of application: 01.06.2016
(73) Proprietor: Reefinterests, 3571 EL Utrecht (NL)
(72) Inventor: TEN KLOOSTER, Jean Paul, NL-3571 EL Utrecht (NL)
(74) Representative: V.O.
(86) International application number: PCT/NL2014/050525
(87) International publication number: WO 2015/012700

(56) References cited:
- EP-A1- 2 264 103
- US-A- 3 984 313
- US-A1- 2005 143 502
- US-B2- 7 244 358
- DATABASE WPI Week 200449 Thomson Scientific, London, GB; AN 2004-510914 XP002717392, -& JP 2004 175848 A (NIPPON SHOKUBAI CO LTD) 24 June 2004 (2004-06-24)
- DATABASE WPI Week 200864 Thomson Scientific, London, GB; AN 2008-K76112 XP002717419, -& JP 2008 150560 A (UNITIKA LTD) 3 July 2008 (2008-07-03)
- BOLEY A ET AL: "Biodegradable polymers as solid substrate and biofilm carrier for denitrification in recirculated aquaculture systems", AQUACULTURAL ENGINEERING, ELSEVIER SCIENCE PUBLISHERS LTD, AMSTERDAM, NL, vol. 22, 2000, pages 75-85, XP002217355, ISSN: 0144-8609, DOI: 10.1016/S0144-8609(00)00033-9

## Description

Field: The invention relates to agents for the removal or reduction of inorganic compounds, preferably nitrogen and phosphate compounds, from an aqueous solution, the agent comprising a hybrid biologically degradable polymer-metal complex, termed hybrid POL/metal-(OH/CO3)n.

### Background

Animals such as fish, shrimp, corals and other invertebrates require low levels of fowling products such as nitrates and phosphates. Methods for maintaining low levels of phosphate in an aqueous solution, for example in aquaria, include one or more of growing and harvesting macroalgae or other rapidly growing organisms, using foods without excessive phosphate, skimming, using limewater, using other phosphate binding media and inducing blooms of microorganisms such as bacteria. Currently, phosphates are removed by using Granular Ferric hydroxide/oxide (GFH) grains or powder. This efficiently removes phosphates. However, GFH is quickly saturated after which it is either replaced by new GFH or regenerated with NaOH. Both methods are costly, time consuming and result in non-recyclable waste products.

Nitrogen can be removed by inducing bacterial growth by adding a hydrogen-carbon source such as sugars, acetic acid or more popular in aquaria, biodegradable polymers such as polyhydroxyalkanoates (PHA), including polyhydroxy butyrate (PHB) and poly(3-hydroxybutyrate-co-3-hydroxyvalerate (PHBV). A further polymer that has been used is polycaprolactone, as is described in US7244358. Especially under hypoxic conditions, the bacteria will rapidly consume N03 and degrade this into N2 and CO2. However, a side product from this process is the toxic compound H2S.

PHA beads can remove nitrates even under high oxygen conditions in a closed system. However, their efficiency is not good enough for flow through systems such as wastewater treatment plants, because it removes only a small percentage of nitrates when contact time is low, which is usually the case in, for example, waste water treatment plants.

The present inventors observed that biodegradable polymer-based pellets are only effective in denitrification when larger quantities of the pellets are used in systems with low levels (around 0.01-0.03 ppm) of phosphate. It was postulated that phosphates may be a rate limiting step for bacterial growth on the biodegradable polymer-based pellets.

Therefore, the present invention provides a filtering agent for water filters comprising a biodegradable polymer that is mixed with metal-(OH/CO3)n beads (hybrid POL/metal-(OH/CO3)n). A combination of a carbon energy source such as PHA with a phosphate-binding compound according to the invention was found to increase bacterial growth on the polymers. Without wishing to be bound by theory, an increase of local phosphate levels on or in the vicinity of the polymer results in increased growth of the bacteria. The increase of bacterial growth results in a more efficient removal of nitrogen and phosphate compounds from an aqueous solution. In addition, the phosphate-binding metal-(OH/CO₃)ₙ within the hybrid beads is constantly regenerated by removal of the bound phosphate by the bacteria. In other words, the metal-(OH/CO₃)ₙ beads that is coupled to the polymer binds phosphates, thereby allowing the bacteria easy access to these phosphates which results in better growth of the bacteria and in a constant recycling of the phosphate-binding metal-(OH/CO₃)ₙ beads. This results in a constant lowering of phosphate compounds and nitrogen compounds without a necessity for regeneration of the metal-(OH/CO₃)ₙ beads.

The term biodegradable polymer, as used herein, refers to a polymer that is non-toxic and capable of degradation by microorganisms. A preferred biodegradable polymer provides not only rigidity and appropriate mechanical properties, but also serves as a hydrogen-carbon source for the growth of microorganisms. A preferred polymer comprises or is selected from the group consisting of polycaprolactone, polylactic acid, poly(lactic-co-glycolic acid), a polyhydroxy alkanoate-type polymer, a natural polymer including a poly(saccharide) such as starch or cellulose, and/or poly(3-hydroxypropionic acid) (P(3-HP), or a mixture of at least two of said polymers. Said biodegradable polymer is more preferred selected from the group consisting of polycaprolactone, polylactic acid, a polyhydroxy alkanoate-type polymer, and mixtures of at least two of said polymers.

The term nitrogen compound, as used herein, refers to organic and, preferably, anorganic nitrogen-containing compounds. Preferred anorganic nitrogen compounds include ammonium, nitrite and nitrate.

The term phosphate compound, as used herein, refers to organic and, preferably, anorganic phospor-containing compounds. Preferred anorganic phosphate compounds include H₃PO₄, H₂PO_{4⁻}, HPO_{4²⁻}, and PO₄.

The term polyhydroxy alkanoate-type polymer, as used herein, refers to linear polyesters produced in nature by bacterial fermentation. They are either a homopolymer or a copolymer of various hydroxy alkanoic acids. A preferred polyhydroxy alkanoate-type polymer according to the invention is polyhydroxy butyrate, poly(3-hydroxybutyrate-co-3-hydroxyvalerate (PHBV), poly(3-hydroxybutyrate-co-3-hydroxyhexanoate) (PHBHHX), poly(3-hydroxybutyrate-co-4-hydroxybutyrate) (P3HB4HB), or a mixture of at least two of said polymers.

A preferred metal-(OH/CO₃)ₙ according to the invention is or comprises Fe(OH)₃, Fe(OH)₂, Fe₂(CO₃)₃, Fe₂O₃, Mg(OH)₃, MgO, Mg2(CO₃)₃, Ca(OH)₂, CaCO₃, La(OH)₃, La₂(CO₃)₃, MnO, MnO₂, Mn(CO)ₙ, Mn(OH)ₙ such as Mn(OH)₂, Mn(OH)₃, Mn(OH)₄, Mn(OH)₆, and Mn(OH)₇, Al(OH)₃ and/or Al2(CO₃)₃. Said metal-(OH/CO3)ₙ preferably is or comprises Fe(OH)₃, Fe₂O₃, La(OH)₃, Al(OH)₃, and Al2(CO₃)₃. Said metal-(OH/CO₃)ₙ is preferably selected from the group consisting of Fe(OH)₃, Fe₂O₃, Al(OH)₃, and Al₂(CO₃)₃, or a mixture thereof. A most preferred metal-(OH/CO₃)ₙ according to the invention comprises, or is, Fe(OH)₃, Fe₂O₃, or a mixture thereof..

In general, a metal hydroxide is in equilibrium with the metal oxide in an aqueous solution. For example, ferric hydroxide (Fe(OH)₃) is known to be in equilibrium with ferric oxide, Fe₂O₃. Solid Fe(OH)₃ spontaneously loses water to form a material that is in between ferric hydroxide (Fe(OH)₃) and ferric oxide, Fe₂O₃, termed ferric oxide hydroxide. Hydrated ferric oxide hydroxide mainly consists of ferric hydroxide. Ferric oxide hydroxide can be completely amorphous, completely crystalline, or a mixture of both forms. Different crystalline forms occur which include, for example, goethite, lepidocrocite, and limonite. Hence, the term metal-(OH)ₙ, as used herein, refers to the hydroxide form of the metal, the oxide form of the metal, as well as the mixed oxide-hydroxide form.

The term metal-(OH/CO₃)ₙ additionally refers to a metal salt after contacting with or dissolving in an aqueous solution. For example, FeCl₃ may form Fe(OH)₃ or Fe₂(CO₃)₃, when dissolved in an aqueous solution, depending amongst others on the pH of the aqueous solution. Hence, the use of a metal ion such as FeCl₃ is covered by the term metal(OH/CO₃)ₙ, if the metal salt is converted into metal hydroxide or metal carbonate after contacting with and/or dissolution in an aqueous solution.

Said metal-(OH/CO₃)ₙ is preferably present in an amount between about 0.1 % - 80 % (w/w, based on the total weight of the hybrid POL/metal-(OH/CO₃)ₙ), preferably between 0.5 % - 50 % (w/w), preferably between 1 % - 25 % (w/w), more preferably about 10 % (w/w).

The hybrid POL/metal-(OH/CO₃)ₙ according to the invention is preferably a powder, more preferably a agglomerate, more preferably a granulate, more preferably a pellet, or a mixture thereof. Agglomerates consist of large particles formed by the joining or binding together of primary particles whose original identity can still be visible in the final agglomerate form. Granules consist of particles formed by the progressive enlargement of primary particles until their original identity is no longer visible. Pellets consist of particulates produced during a forming and mechanical handling operation.

Agglomeration, granulation and pelletizing processes may involve wetting and mechanical handling of particulates, as is known in the art. An open and porous agglomerate structure may be altered into a more closed and grain-like granule structure by amending the degree of wetting and mixing. The generation of particulates involves the control of moisture and energy input to achieve a desired change in structural and other properties.

The average size of said agglomerate, granulate or, preferably, pellet is preferably between 0.1 mm and 10 mm, more preferred between 0.5 mm and 5 mm, more preferred between 1 mm and 3 mm, such as 1 mm, 1.5 mm, 2 mm, 2.5 mm or 3 mm. The absolute sizes of said agglomerate, granulate or, preferably, pellet is preferably between 0.01 and 25 mm, preferably between 0.05 and 20 mm.

Said pellets are preferably produced with the aid of a pellet mill or equipment for extrusion and/or spheronization (also called marumerization). A preferred method for generating a hybrid POL/metal-(OH/CO3)n according to the invention comprises blending, preferably dry-blending, the metal-(OH/CO3)n with a polymer powder at the indicated ratio's, followed by extrusion to obtain the hybrid pellets. Said pellets may be marbles, rods, fibers, webs, hollow profiles such as hollow tubes, preferably marbles.

The blending time is preferably between 10 minutes and 24 hours, more preferred between 20 minutes and 10 hours, more preferred between 30 minutes and 5 hours, more preferred about 1 hour. Said blending is preferably performed at a temperature between 0 °C and 160 °C, more preferred at a between 20 °C and 100 °C, more preferred between 30 °C and 90 °C. The extrusion step is preferably performed by warm or cold extrusion. Warm extrusion is performed at a temperature above room temperature, but below the recrystallization temperature of the material, usually between 60 °C and 400 °C. Cold extrusion is performed at room temperature or near room temperature, usually between 0 °C and 60 °C. For example, 100 gram of Fe(OH)3 is dry blended with 900 gram PHBV powder for 1 hour at RT after which it is run through an standard extruder to obtain the hybrid pellets. It is preferred to heat the mold cavity of the extruder to at least 60°C to ensure the parts crystallize to their maximum amount in the mold. It is further preferred that the resin or mixed resin is dried to a maximum of 500 ppm of moisture, more preferred a maximum of 250 ppm of moisture, as measured by a Karl Fischer method.

Therefore, the invention also provides a method for producing hybrid pellets comprising a filtering agent for water filters, said filtering agent comprising a biodegradable polymer that is mixed with metal-(OH/CO3)n beads according to the invention (hybrid POL/metal-(OH/CO3)n), the method comprising blending the metal-(OH/CO3)n with a polymer powder, followed by extrusion to obtain hybrid pellets, wherein said metal-(OH/CO3)n is present in an amount between 0.1 % and 80 % (w/w, based on the total weight of the hybrid POL/metal-(OH/CO3)n).

The invention further provides a container comprising the filtering agent comprising a hybrid POL/metal-(OH/CO3)n according to the invention. Said container preferably is a filter chamber, fleece bag, gauze bag or other water-permeable container. Said container may further comprise other materials such as, for example sand and/or gravel, in addition to the hybrid POL/metal-(OH/CO3)n. Said container preferably is, or is a part of, an aerobically or anaerobically operating filtering system, such as a Trickle filter and a fluidized bed filter. Said container preferably comprises a housing that encloses the hybrid POL/metal-(OH/CO3)n, the housing further comprising a) a liquid inlet through which a liquid specimen can enter the housing and adapted for engaging with said liquid specimen, and b) a liquid outlet through which said liquid specimen can leave the filter housing and adapted for engaging with said liquid specimen.

A Trickle filter, also known as wet/dry filter, is a water filtration system for marine and freshwater aquaria. This filter is either placed on top of the aquarium or below the aquarium. If the wet/dry filter is placed on top of the aquarium, water is pumped over a number of perforated trays containing filter wool or other filter material. The water trickles through the trays, keeping the filter material wet but not completely submerged, allowing aerobic bacteria to grow and aiding biological filtration of, for example, nitrogen compounds. After filtering, the water is returned to the aquarium.

If the wet/dry filter is placed below the tank, water is fed by gravity to the filter. Prefiltered water is delivered to a perforated plate (drip plate). Prefiltering may take place in the aquarium via a foam block or sleeve in the overflow, or weir siphon, or it may be prefiltered by filter wool resting on the perforated plate. The waste laden water from the aquarium spreads over the drip plate, and rains down through a medium. This may be a filter wool/plastic grid rolled into a circular shape (DLS or "Double Layer Spiral") or any number of plastic media that are known in the art. As the water cascades over the media, CO2 is given off, oxygen is picked up, and bacteria convert the waste from the tank, including nitrogen compounds, into less harmful materials such as nitrate. The water enters a sump, which may contain a number of compartments, each with its own filtration material. Often, heaters and thermostats are placed in the sump.

The principle of a fluidized bed filter is to direct water through a bed comprising hybrid POL/metal-(OH/CO3)n from below so that the bed becomes fluidized. This mechanism can be used in liquefaction and industrial processes including industrial and/or municipal sewage treatment. The surface of the bed comprising hybrid POL/metal-(OH/CO₃)ₙ in the filter is very large, and so there is a large surface for aerobic denitrification bacteria. Therefore the size of the filter can be modest. The fluidized bed filter can be internal or external.

As an alternative, a moving bed biofilm reactor can be used for nitrogen removal, in which the hybrid POL/metal-(OH/CO₃)ₙ, preferably as granule or pellet, operate in mixed motion within an aerated basin. Each granule or pellet provides surface area to support the growth of heterotrophic and autotrophic bacteria. It is this high-density population of bacteria that achieves high-rate biodegradation within the system, while also offering process reliability and ease of operation. A moving bed biofilm reactor is especially suited for waste water treatment.

An aerobically operating filtering system comprising a container according to the invention preferably further comprises a protein skimmer, also termed a foam fractionator. Protein skimmers are primarily used in marine systems and not freshwater systems because the density of freshwater is not high enough for protein skimmers to work properly. There are a four design types: Venturi, co-current (unidirectional flow of air and water), counter-current (opposing flow) and Down Draft. A preferred protein skimmer for marine aquariums is the Venturi driven protein skimmer, which provides an efficient means for removing dissolved and small particulate organic compounds. A Down Draft protein skimmer is preferred for larger marine systems, such as aquaria comprising more than 1000 liters, because greater volumes of water can be exposed to filtration.

The invention further provides a method of reducing nitrogen compounds, such as ammonium, nitrite and nitrate, from an aqueous solution, comprising providing a filtering agent comprising the hybrid POL/metal-(OH/CO₃)ₙ according to the invention, allowing at least part of the aqueous solution to come in contact with the hybrid POL/metal-(OH/CO₃)ₙ (input aqueous solution), and removing the filtered aqueous solution that has been in contact with the hybrid POL/metal-(OH/CO₃)ₙ and which has reduced levels of nitrogen compounds, when compared to the input aqueous solution, from the hybrid POL/metal-(OH/CO₃)ₙ. If said aqueous solution is present in a receptacle, for example an aquarium, the filtered aqueous solution that has been in contact with the hybrid POL/metal-(OH/CO₃)ₙ and which has reduced levels of nitrogen compounds, when compared to the input aqueous solution, is preferably circulated back into the receptacle.

Daily feeding of fish and other water organisms causes a regular introduction of organic nitrogen compounds in aquarium systems. Proper management of the nitrogen cycle is a vital element of a successful aquarium. Excretia and other decomposing organic matter produce ammonia which is highly toxic to fish. Bacterial processes oxidize this ammonia into the slightly less toxic nitrites, and these are in turn oxidized to form the much less toxic nitrates. These nitrates are subsequently taken up by the same or other microorganisms as a nitrogen source, or converted to nitrogen gas by anaerobic bacteria. The filtering agent comprising the hybrid POL/metal-(OH/CO₃)ₙ according to the invention is very well suited to remove or eliminate organic nitrogen compounds, preferably ammonia, nitrite and nitrate.

In addition, nitrogen and phosphate compounds are the main pollutants of aquatic systems which may result from different contamination sources and cause serious environmental and ecological problems. Eutrophication is the slow, natural nutrient enrichment of streams and lakes and is responsible for the "aging" of ponds, lakes, and reservoirs. Excessive amounts of nutrients, especially nitrogen and phosphorus, accelerate the eutrophication process. As algae grow and then decompose they deplete the dissolved oxygen in the water. This condition usually results in fish kills, offensive odours, unsightliness, and reduced attractiveness of the water for recreation and other public uses. The present methods are effective for removing nitrogen and phosphate compounds from, for example, ground water and industrial and/or municipal sewage, in a water treatment plant prior to drainage of the treated water to surface water.

The use of the filtering agent comprising the hybrid POL/metal-(OH/CO₃)ₙ according to the invention surprisingly resulted in a quick, very effective ammonia reduction to levels below 1 ppm, or even close to 0 ppm under aerobic operating conditions. In addition, the use of the filtering agent comprising the hybrid POL/metal-(OH/CO₃)ₙ according to the invention resulted in a quick, very effective phosphate reduction under aerobic operating conditions to levels below 0.02-0.03 ppm. Surprisingly, here was no need for replacement of the metal-(OH/CO₃)ₙ or for regeneration of the metal-(OH/CO₃)ₙ with, for example, sodium hydroxide. Apparently, the bacteria on the hybrid POL/metal-(OH/CO3)n provide in a constant recycling of the phosphate-binding metal-(OH/CO3)n beads.

The aqueous solution that is used in a method according to the invention preferably comprises or is fresh water, marine water, or waste water.

In one embodiment, the method according to the invention provides efficient ammonia reduction from an aqueous solution in a receptacle such as an aquarium comprising fresh water or marine water. Said method helps to maintain water quality in recirculating or closed loop systems.

In a further embodiment, the method according to the invention provides efficient ammonia reduction from waste water, for example from municipal or industrial sewage. Preferred filtering systems for ammonia reduction from waste water comprise a trickling filter system, comprising a fixed bed of, for example, rocks, lava, coke, gravel, slag, polyurethane foam, sphagnum peat moss, ceramic, or plastic media over which sewage or other wastewater flows downward and causes a layer of microbial slime (biofilm) to grow, covering the bed of media. Aerobic conditions are maintained by splashing, diffusion, and either by forced air flowing through the bed or natural convection of air if the filter medium is porous. Further preferred filtering systems for ammonia reduction from waste water are fluidized bed filters and moving bed biofilm reactors.

The filtering agent comprising the hybrid POL/metal-(OH/CO₃)ₙ according to the invention, for example a container according to invention, is preferably inoculated with bacteria. In general, there are three types of aerobic microorganisms that colonize biofilters for aquaculture: heterotrophic bacteria, *Nitrosomonos* spp. bacteria, and *Nitrospira* spp. bacteria.

Heterotrophic bacteria utilize the dissolved carbonaceous material from the polymer as their carbon source. *Nitrosomonos* spp. bacteria utilize ammonia and produce nitrite as a waste product. *Nitrospira* spp. utilize nitrite and produce nitrate as a waste product. *Nitrosomonos* and *Nitrospira* will both grow and colonize the biofilter as long as there is a carbon and nitrogen source available. Nitrate is either use by organisms including the heterotrophic bacteria as a nitrogen source for bioconversion into biomolecules such as proteins, or may be reduced to N2 by the heterotrophic bacteria. A preferred source of heterotrophic bacteria, *Nitrosomonos* spp. bacteria and *Nitrospira* spp. bacteria is provided by waste water from a waste water treatment plant.

The methods according to the invention also result in reduced phosphate compounds from an aqueous solution, besides reduced levels of ammonium, nitrate and nitrite. Inorganic orthophosphate, including H₃PO₄, H₂PO₄-, HPO₄²-, and PO₄³-, is a form of phosphorus that is readily bound by iron oxide hydroxide materials. Orthophosphate is also present in natural marine water, although other forms exist there as well. Its concentration in marine water greatly varies from place to place, and also with depth and with the time of day. Surface waters are greatly depleted of phosphate relative to deeper waters, due to biological activities in the surface waters that sequester phosphate in organisms. Typical ocean surface phosphate concentrations are very low, sometimes as low as 0.005 ppm.

Absent specific efforts to minimize the phosphate level, phosphates will typically accumulate and rise in aquaria. Phosphate is often a limiting nutrient for algae growth. Elevation of phosphate compounds will permit excessive growth of undesirable algae. In addition, elevation of phosphate compounds will directly inhibit calcification by corals and coralline algae. Therefore, phosphate levels are kept low especially in marine aquaria, including reef aquaria, preferably below about 0.03 ppm, more preferably below 0.01 ppm. If iron and/or nitrogen sources such as nitrate are maintained at normal levels, the growth rate of especially algae becomes independent of phosphate concentration at phosphate levels above 0.03 ppm.

The invention further provides the use of the filtering agent comprising the hybrid POL/metal-(OH/CO3)n according to the invention, for example the container according to the invention, for reducing nitrogen compounds and phosphate compounds from an aqueous solution, preferably from an aqueous solution in a receptacle.

The invention further provides a filtering agent for water filters comprising the hybrid POL/metal-(OH/CO3)n according to the invention, for example comprising a container according to the invention. Said filtering agent preferably is a Trickle filter, a fluidized bed filter, or a moving bed biofilm reactor.

### Figure legends

Figure 1. Nitrate reduction in a flow-through system over time using hybrid POL/metal-(OH/CO3)n according to the invention.
Figure 2. Nitrate reduction in a recirculating system over time using hybrid POL/metal-(OH/CO3)n according to the invention.
Figure 3. Phosphate reduction in a recirculating system over time using hybrid POL/metal-(OH/CO3)n according to the invention.

### Examples

Example 1. Comparison of PHBV beads alone compared to hybrid POL/metal-(OH/CO3)n in a fresh water flow through system.

### Materials and methods

50 or 100 gram of Fe(OH)3 (Merck) was dry blended with 950 or 900 gram, respectively, of PHBV powder (TianAn Biopolymer, Ningbo City, China) for 1 hour at RT after which it was run through an standard extruder using injection molding to obtain the hybrid pellets. It is preferred to heat the mold cavity to at least 60°C to ensure the parts crystallize to their maximum amount in the mold. It is further preferred that the resin or mixed resin is dried to a maximum of 250 ppm of moisture as measured by a Karl Fischer method. Typical processing temperature settings are given in table 1 below:

**Table 1. Typical processing temperature settings.**

| | |
|---|---|
| Feed Temperature | 135°C |
| Compression Section | 145°C |
| Metering Section | 155°C |
| Adapter | 160°C |
| Die | 160°C |
| Screw Speed | 40-50 rpm |
| Mold Temperature * | 60°C |

As a control, 950 or 900 gram PHBV powder was extruded without iron hydroxide. 50 and 100 gram of GFO (granular ferric oxide/hydroxide) (Fe(OH)3) was taken as a second control.

All beads were set up in flow-through systems with cylindrical columns, with starting concentrations of nitrate of 15 ppm and phosphate of 5ppm. Prior to nitrate dosing, the beads were inoculated with bacteria by using waste water from a local waste water treatment plant. Flow velocity was 100 ml/30min.

Samples were taken daily and tested for nitrates (expressed in parts per million (ppm)) using a Thermo Scientific Orion nitrate test kit (Cat. No. 700005).

### Results

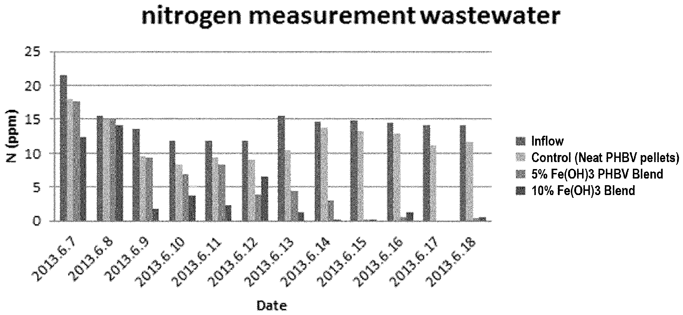

As is shown in Figure 1, the average nitrogen content of the outflow of normal PHBV pellets over a 10 days period is 12ppm. The reduction of nitrates by normal PHBV pellets is thus (15-12)*100/15 = 20%. The nitrogen content of the outflow of hybrid POL/metal-(OH/CO3)n pellets over a 10 days period is 1 ppm. The growth of microorganisms, especially bacteria, on the hybrid POL/metal-(OH/CO3)n pellets results in an increase of the removal of nitrate over time. The reduction of nitrates in the presence of FeOH3 is 0% (data not shown).

The result are clearly indicative of a surprising effect of the combination of 50 Fe(OH)3 with PHBV in the hybrid POL/metal-(OH/CO3)n, compared to the individual components.

Although iron hydroxide is not known to be involved in nitrogen fixation, the expected reduction as a result of a combination of normal PHBV pellets and iron hydroxide can be calculated as E=X+Y-[(X*Y)/100]. X is the percentage of nitrogen removal in the presence of normal PHBV pellets, while Y is the percentage of nitrogen removal in the presence of iron hydroxide. In the presented case, X = 20, while Y = 0. This means that the expected nitrate removal of the PHBV-FeOH3 hybrid (E) is 20%.

The nitrogen content of the outflow of hybrid POL/metal-(OH/CO3)n pellets is 1 ppm. Inflow is 15 ppm. The observed reduction is therefore (15-1)*100/15= 93%. Thus the ratio of Observed/Expected = 4.7 which is higher than 1. There is thus a clear synergistic effect of the hybrid on nitrate reduction for experiment 1.

Example 2. Comparison of PHBV beads in parallel with granular ferric oxide (GFO), compared to POL/metal-(OH/CO3)n in a closed marine water system.

### Materials and methods

For this experiment we used a fully functional and biologically active marine tank of 650 litres containing both invertebrates and fish (approximately 60 species). The system contains a protein skimmer (BBK supermarine 250), a recirculating pump of 2000 l/h (Sicce). Marine Salt (Red Sea Pro) concentration was 35 ppm, temperature was maintained at 26 °C and the pH varied between 7.9 and 8.2.

In a first setup (setup 1), 2 kg of GFO and 5 kg of PHBV pellets were placed in sequential cylindrical fluidized filters. GFO beads were replaced every two weeks when an increase in phosphate levels was observed.

Set-up 2): 5 kg (in total) of PHBV-FeOH3 hybrid were placed in sequential cylindrical fluidized filters.

The aquaria in both setups were daily fed with 5 gram of reef pearls (Reef Interets, Utrecht, the Netherlands). Nitrate and phosphate levels were measured every 2 days at 8 AM, using standard N03 and P04 kits from Salifert (the Netherlands).

### Results

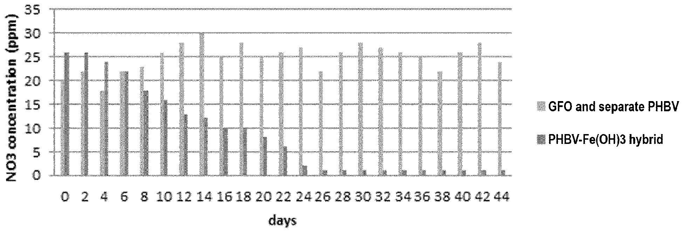

Daily feeding of 5 gram of reef pearls would increase nitrate levels about 20 ppm per day in the absence of PHBV pellets, while phosphate levels would increase about 0.1 ppm per day when no GFO (granular ferric oxide/hydroxide) would be present. As is shown in Figure 2, the levels of nitrate remain more or less constant in setup 1 at about 20 ppm. This means that the reduction of nitrogen when using separated GFO and PHBV pellets is about 20 ppm per day, thus about 50%.

When using the hybrid there is an additional drop of nitrates observed to about 1 ppm. This shows that the combination of GFO and a biodegradable polymer in the form of a hybrid POL/metal-(OH/CO3)n), is much more than the sum of the individual components. Hence, there is a synergistic effect for nitrate removal when using the hybrid POL/metal-(OH/CO3)n) according to the invention.

We also tested the efficiency of phosphate removal in both experimental setups. We postulated that the presence of bacteria would allow constant biological regeneration of the FeOH3 present in the hybrid due to phosphate removal from iron compound by bacteria. This would allow the constant binding of new phosphate compounds to the Fe3+ ions present in the hybrid.

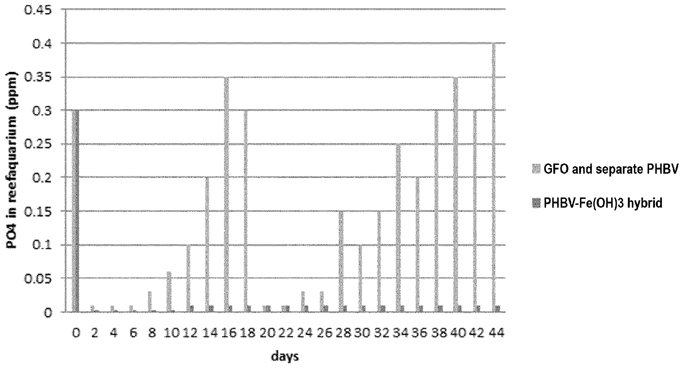

As can be observed in Figure 3, GFO beads became saturated with phosphates after 2-3 weeks. The phosphate levels present in the tank were increasing until GFO is replaced with a fresh batch of 2 kg GFO.

In contrast, when using the hybrid POL/metal-(OH/CO3)n) according to the invention containing only 10% FeOH3 (about 500 grams), we observed a drop in phosphates that never exceeded 0.01 ppm.

Even after 60 days, phosphate levels were down to 0.01 ppm, without a need for replacing the hybrid POL/metal-(OH/CO3)n). This clearly shows the great advantage of the hybrid POL/metal-(OH/CO3)n) according to the invention, also for phosphate removal.

Example 3 Comparison of PHBV beads with different metal-(OH/CO₃)ₙ.

### Materials and methods

Wastewater with an initial nitrogen content of 15 ppm was continuously fled through cylindrical fluidized filters comprising 200 gram of different PHBV-metal hybrids. Bacteria growing on the biopellets are already present in wastewater and no pre-inoculation is required Nitrogen (nitrates) content was determined with standard NO2-detection kit from Merck (Reflectoquant®, MerckMillipore, Amsterdam, the Netherlands), daily over a period of 12 days.

### Results

As is shown in Table 2, PHBV alone or PHBV-Ca(OH)₂ did not result in effective denitrification of the wastewater. PHBV in combination with manganese, either in the form of manganese oxide (MnO) or manganese hydroxide (Mn(OH)₂), resulted in a slightly more effective denitrification of the wastewater. As is clear from this table, PHBV in combination with aluminium as Al(OH)₃ or with iron as Fe(OH)₃ resulted in a very efficient removal of nitrogen compounds from the waste water.

**Table 2. Nitrogen in wastewater with different PHBV-metal hybrids**

| day | inflow | PBHV | PHBV-AL(OH)3 | PHBV-Fe(OH)3 | PHBV-Ca(OH)2 | PHBV-MnOxide | PHBV-Mg(OH)2 |
|---|---|---|---|---|---|---|---|
| 1 | 15 | 15 | 15 | 15 | 15 | 15 | 15 |
| 2 | 15 | 15 | 15 | 14 | 15 | 14 | 15 |
| 3 | 15 | 13 | 9 | 2 | 13 | 13 | 14 |
| 4 | 15 | 11 | 7 | 3 | 12 | 11 | 11 |
| 5 | 15 | 10 | 9 | 2 | 10 | 10 | 10 |
| 6 | 15 | 9 | 6 | 2 | 10 | 10 | 10 |
| 7 | 15 | 10 | 5 | 1 | 9 | 9 | 11 |
| 8 | 15 | 12 | 3 | 0 | 11 | 10 | 11 |
| 9 | 15 | 11 | 3 | 0 | 12 | 9 | 12 |
| 10 | 15 | 12 | 4 | 0 | 12 | 10 | 11 |
| 11 | 15 | 11 | 4 | 0 | 10 | 8 | 10 |
| 12 | 15 | 11 | 3 | 0 | 11 | 9 | 10 |

## Claims

1. A filtering agent for water filters comprising a biodegradable polymer that is mixed with metal-(OH/CO3)n beads (hybrid POL/metal-(OH/CO3)n), whereby the polymer is selected from the group consisting of polycaprolactone, polylactic acid, poly(lactic-co-glycolic acid), a polyhydroxy alkanoate-type polymer, a natural polymer and poly(3-hydroxypropionic acid) (P(3-HP)), or a mixture of at least two of said polymers, and whereby the metal-(OH/CO3)n is selected from the group consisting of Fe(OH)₃, Fe₂O₃, Al(OH)₃, Al₂(CO₃)₃, and La(OH)₃.

2. The filtering agent according to claim 1, wherein the polymer is polycaprolactone, polylactic acid, a polyhydroxy alkanoate-type polymer, or a mixture of at least two of said polymers.

3. The filtering agent of claim 1 or claim 2, wherein the polyhydroxy alkanoate-type polymer is polyhydroxy butyrate, poly(3-hydroxybutyrate-co-3-hydroxyvalerate (PHBV), poly(3-hydroxybutyrate-co-3-hydroxyhexanoate) (PHBHHX), poly(3-hydroxybutyrate-co-4-hydroxybutyrate) (P3HB4HB), or a mixture of at least two of said polymers.

4. The filtering agent according to any one of claims 1-3, wherein the metal-(OH/CO₃)n is Fe(OH)₃ or Fe₂O₃.

5. The filtering agent according to any one of the previous claims, wherein the hybrid POL/metal-(OH/CO₃)n is granulated.

6. The filtering agent according to any one of claims 1-4, wherein the hybrid POL/metal-(OH/CO₃)n is provided as pellets.

7. A container comprising the filtering agent according to any one of the previous claims.

8. A container according to claim 7, which is a fluidized bed reactor.

9. A method of reducing nitrogen compounds from an aqueous solution, comprising
providing the filtering agent according to any one of claims 1-6, or the container according to claim 7 or 8;
allowing at least part of the aqueous solution to come in contact with the hybrid POL/metal-(OH/CO₃)n (input aqueous solution); and
removing the aqueous solution that has been in contact with the hybrid POL/metal-(OH/CO₃)n and which has reduced levels of nitrogen compounds, when compared to the input aqueous solution, from the hybrid POL/metal-(OH/CO₃)n.

10. The method according to claim 9, wherein the aqueous solution is present in a receptacle, and the aqueous solution that has been in contact with the hybrid POL/metal-(OH/CO₃)n and which has reduced levels of nitrogen compounds, when compared to the input aqueous solution, is circulated back into the receptacle.

11. The method according to claim 9 or claim 10, wherein the aqueous solution comprises fresh water, marine water, or waste water.

12. The method according to any one of claims 9-11, wherein the hybrid filtering agent according to any one of claims 1-6, or the container according to claim 7 or 8 is inoculated with bacteria.

13. The method according to any one of claims 9-12, further resulting in reduced phosphate compounds from the aqueous solution.

14. Use of the filtering agent according to any one of claims 1-6, or the container according to claim 7 or 8, for reducing nitrogen compounds from an aqueous solution.

15. A method for producing hybrid pellets comprising a filtering agent for water filters comprising a biodegradable polymer that is mixed with metal-(OH/CO₃)n beads (hybrid POL/metal-(OH/CO₃)n), comprising blending the metal-(OH/CO₃)n with a polymer powder, followed by extrusion to obtain hybrid pellets, wherein said metal-(OH/CO₃)n is present in an amount between 0.1 % and 80 % (w/w, based on the total weight of the hybrid POL/metal-(OH/CO₃)n).

## Patentansprüche

1. Filtermittel für Wasserfilter, umfassend ein biologisch abbaubares Polymer, das mit Metall-(OH/CO3)n Kügelchen (Hybrid-POL/Metall-(OH/CO3)n) vermischt ist, wobei das Polymer ausgewählt ist aus der Gruppe, bestehend aus Polycaprolacton, Polymilchsäure, Poly(milch-co-glycolsäure), einem Polymer vom Polyhydroxyalkanoat-Typ, einem natürlichen Polymer und Poly(3-hydroxypropionsäure) (P(3-HP)), oder einem Gemisch von mindestens zwei der Polymere, und wobei das Metall-(OH/CO3)n ausgewählt ist aus der Gruppe, bestehend aus Fe(OH)₃, Fe₂O₃, Al(OH)₃, Al₂(CO₃)₃ und La(OH)₃.

2. Filtermittel nach Anspruch 1, wobei das Polymer Polycaprolacton, Polymilchsäure, ein Polymer vom Polyhydroxyalkanoat-Typ oder ein Gemisch von mindestens zwei der Polymere ist.

3. Filtermittel von Anspruch 1 oder Anspruch 2, wobei das Polymer vom Polyhydroxyalkanoat-Typ Polyhydroxybutyrat, Poly(3-hydroxybutyrat-co-3-hydroxyvalerat (PHBV), Poly(3-hydroxybutyrat-co-3-hydroxyhexanoat) (PHBHHX), Poly(3-hydroxybutyrat-co-4-hydroxybutyrat) (P3HB4HB) oder ein Gemisch von mindestens zwei der Polymere ist.

4. Filtermittel nach einem der Ansprüche 1-3, wobei das Metall-(OH/CO₃)n Fe(OH)₃ oder Fe₂O₃ ist.

5. Filtermittel nach einem der vorhergehenden Ansprüche, wobei das Hybrid-POL/Metall-(OH/CO₃)n granuliert ist.

6. Filtermittel nach einem der Ansprüche 1-4, wobei das Hybrid-POL/Metall-(OH/CO₃)n als Pellets bereitgestellt wird.

7. Behälter, umfassend das Filtermittel nach einem der vorhergehenden Ansprüche.

8. Behälter nach Anspruch 7, welcher ein Fließbettreaktor ist.

9. Verfahren zur Reduktion von Stickstoffverbindungen aus einer wässrigen Lösung, umfassend
Bereitstellen des Filtermittels nach einem der Ansprüche 1-6 oder des Behälters nach Anspruch 7 oder 8;
Zulassen, dass mindestens ein Teil der wässrigen Lösung in Kontakt mit dem Hybrid- POL/Metall-(OH/CO₃)n (eingebrachte wässrige Lösung) kommt; und
Entfernen der wässrigen Lösung, die in Kontakt mit dem hybriden POL/Metall-(OH/CO₃)n gewesen ist, und die reduzierte Spiegel von Stickstoffverbindungen hat, wenn verglichen mit der eingebrachten wässrigen Lösung, aus dem Hybrid-POL/Metall-(OH/CO₃)n.

10. Verfahren nach Anspruch 9, wobei die wässrige Lösung in einem Aufnahmebehältnis vorhanden ist und die wässrige Lösung, die in Kontakt mit dem Hybrid-POL/Metall-(OH/CO₃)n gewesen ist und die reduzierte Spiegel von Stickstoffverbindungen hat, wenn verglichen mit der eingebrachten wässrigen Lösung, in das Aufnahmebehältnis zurückzirkuliert wird.

11. Verfahren nach Anspruch 9 oder Anspruch 10, wobei die wässrige Lösung Süßwasser, Meerwasser oder Abwasser umfasst.

12. Verfahren nach einem der Ansprüche 9-11, wobei das hybride Filtermittel nach einem der Ansprüche 1-6 oder der Behälter nach Anspruch 7 oder 8 mit Bakterien beimpft wird.

13. Verfahren nach einem der Ansprüche 9-12, ferner resultierend in reduzierten Phosphatverbindungen aus der wässrigen Lösung.

14. Verwendung des Filtermittels nach einem der Ansprüche 1-6 oder des Behälters nach Anspruch 7 oder 8 zur Reduktion von Stickstoffverbindungen aus einer wässrigen Lösung.

15. Verfahren zur Herstellung hybrider Pellets, umfassend ein Filtermittel für Wasserfilter, umfassend ein biologisch abbaubares Polymer, das mit Metall-(OH/CO₃)n Kügelchen (Hybrid- POL/Metall-(OH/CO₃)n) gemischt ist, umfassend Vermischen des Metall-(OH/CO₃)n mit einem Polymerpulver, gefolgt von Extrusion, um hybride Pellets zu erhalten, wobei das Metall-(OH/CO₃)n in einer Menge zwischen 0,1 % und 80 % (w/w, basierend auf dem Gesamtgewicht des hybriden POL/Metall-(OH/CO₃)n) vorhanden ist.

## Revendications

1. Agent de filtration pour filtres à eau comprenant un polymère biodégradable qui est mélangé avec des perles de métal-(OH/CO₃)n (hybride POL/métal-(OH/CO₃)n), le polymère étant choisi dans le groupe constitué de la polycaprolactone, de l'acide polylactique, de l'acide poly(lactique-co-glycolique), d'un polymère de type polyhydroxyalcanoate, d'un polymère naturel et de l'acide poly(3-hydroxypropionique) (P(3-HP)), ou d'un mélange d'au moins deux desdits polymères et le métal-(OH/CO₃)n étant choisi dans le groupe constitué de Fe(OH)₃, Fe₂O₃, Al(OH)₃, Al₂(CO₃)₃ et La(OH)₃.

2. Agent de filtration selon la revendication 1, dans lequel le polymère est la polycaprolactone, l'acide polylactique, un polymère de type polyhydroxyalcanoate ou un mélange d'au moins deux desdits polymères.

3. Agent de filtration selon la revendication 1 ou la revendication 2, dans lequel le polymère de type polyhydroxyalcanoate est le polyhydroxybutyrate, le poly(3-hydroxybutyrate-co-3-hydroxyvalérate) (PHBV), le poly(3-hydroxybutyrate-co-3-hydroxyhexanoate) (PHBHHX), le poly(3-hydroxybutyrate-co-4-hydroxybutyrate) (P3HB4HB) ou un mélange d'au moins deux desdits polymères.

4. Agent de filtration selon l'une quelconque des revendications 1 à 3, dans lequel le métal-(OH/CO₃)n est le Fe(OH)₃ ou le Fe₂O₃.

5. Agent de filtration selon l'une quelconque des revendications précédentes, dans lequel l'hybride POL/métal-(OH/CO₃)n est granulé.

6. Agent de filtration selon l'une quelconque des revendications 1 à 4, dans lequel l'hybride POL/métal-(OH/CO₃)n est fourni sous forme de granulés.

7. Récipient comprenant l'agent de filtration selon l'une quelconque des revendications précédentes.

8. Récipient selon la revendication 7, qui est un réacteur à lit fluidisé.

9. Procédé de réduction de composés azotés à partir d'une solution aqueuse, comprenant les étapes consistant à :
fournir l'agent de filtration selon l'une quelconque des revendications 1 à 6 ou le récipient selon la revendication 7 ou 8 ;
laisser au moins une partie de la solution aqueuse venir en contact avec l'hybride POL/métal-(OH/CO₃)n (solution aqueuse d'admission) ; et
éliminer la solution aqueuse ayant été en contact avec l'hybride POL/métal-(OH/CO₃)n et qui présente des niveaux réduits de composés azotés, comparé à la solution aqueuse d'admission, de l'hybride POL/métal-(OH/CO₃)n.

10. Procédé selon la revendication 9, dans lequel la solution aqueuse est présente dans un réceptacle et la solution aqueuse ayant été en contact avec l'hybride POL/métal-(OH/CO₃)n et qui présente des niveaux réduits de composés azotés, comparé à la solution aqueuse d'admission, est renvoyée dans le réceptacle.

11. Procédé selon la revendication 9 ou la revendication 10, dans lequel la solution aqueuse comprend de l'eau fraîche, de l'eau de mer ou des eaux usées.

12. Procédé selon l'une quelconque des revendications 9 à 11, dans lequel l'agent de filtration hybride selon l'une quelconque des revendications 1 à 6, ou le récipient selon la revendication 7 ou 8, est inoculé avec des bactéries.

13. Procédé selon l'une quelconque des revendications 9 à 12, comprenant en outre des composés phosphatés réduits à partir de la solution aqueuse.

14. Utilisation de l'agent de filtration selon l'une quelconque des revendications 1 à 6 ou récipient selon la revendication 7 ou 8, pour réduire les composés azotés à partir d'une solution aqueuse.

15. Procédé pour produire des granulés hybrides comprenant un agent de filtration pour filtres à eau comprenant un polymère biodégradable qui est mélangé avec des perles de métal-(OH/CO₃)n (hybride POL/métal-(OH/CO₃)n), comprenant le mélange du métal-(OH/CO₃)n avec un polymère en poudre, suivi d'une extrusion pour obtenir des granulés hybrides, ledit métal-(OH/CO₃)n étant présent dans une quantité comprise entre 0,1 % et 80 % (p/p, sur la base du poids total de l'hybride POL/métal-(OH/CO₃)n).
